(19) Europäisches Patentamt
European Patent Office
Office européen des brevets

(11) **EP 4 560 541 A1**

(12) **EUROPEAN PATENT APPLICATION**

(43) Date of publication:
**28.05.2025  Bulletin 2025/22**

(21) Application number: **23212112.9**

(22) Date of filing: **24.11.2023**

(51) International Patent Classification (IPC):
**G06N 10/20** (2022.01)      **G06N 10/60** (2022.01)
**G06N 10/80** (2022.01)

(52) Cooperative Patent Classification (CPC):
**G06N 10/20; G06N 10/60; G06N 10/80**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **BULL SAS**
**78340 Les Clayes-Sous-Bois (FR)**

(72) Inventors:
• **GAZDA, Arnaud**
  **78000 VERSAILLES (FR)**
• **KOSKA, Océane**
  **78340 LES CLAYES SOUS BOIS (FR)**

(74) Representative: **Plasseraud IP**
  **104 Rue de Richelieu**
  **CS92104**
  **75080 Paris Cedex 02 (FR)**

(54) **METHOD FOR DETERMINING TENSOR PRODUCT DATA AND APPARATUS FOR IMPLEMENTING THE SAME**

(57)    A computer-implemented method for processing, on a non-quantum computer, quantum data that represent one or more tensor products of a Pauli operator basis $\wp_n$ of size $n \in \mathbb{N}^*$, wherein $\wp_n$ comprises all the possible tensor products of n matrices of the set $5 = \{I, X, Y, Z\}$, wherein I is a 2x2 identity matrix, and X, Y, Z are the following Pauli matrices:

$$X = \begin{bmatrix} 0 & 1 \\ 1 & 0 \end{bmatrix}, Y = \begin{bmatrix} 0 & -i \\ i & 0 \end{bmatrix}, \text{ and}$$

$$Z = \begin{bmatrix} 1 & 0 \\ 0 & -1 \end{bmatrix}, \text{ is proposed, which comprises: gen-}$$

erating a data tree as a data structure that represents the one or more tensor products of the Pauli operator basis $\wp_n$, wherein the one or more tensor products respectively correspond to one or more paths of the data tree each running from a root node of the data tree to a leaf of the data tree, and determining the one or more tensor products of the Pauli operator basis $\wp_n$ by performing a tree exploration of the generated data tree.

**EP 4 560 541 A1**

11

Generating a data tree as a data structure that represents one or more tensor products, the one or more tensor products respectively corresponding to one or more paths of the data tree, a path of the data tree running from a root node of the data tree to a leaf of the data tree

Determining the one or more tensor products by performing a tree exploration of the generated data tree

12

10

# FIG. 1

**Description**

The present subject disclosure relates to the field of quantum computing, in particular to a method for determining tensor products of Pauli operators of a Pauli basis, and apparatuses for implementing the same.

Applications involving quantum computations, that is computations to be executed on a quantum computer, sometimes require block encoding of such a matrix of $\mathbb{C}^{2^n \times 2^n}$ for quantum singular value transformation. The block encoding may typically be performed using a decomposition of the matrix using a basis of Pauli operators, which requires computing a potentially large number n of tensor products of matrices (Pauli operators) of a Pauli operator basis.

However, the execution time of computations using a matrix of $\mathbb{C}^{2^n \times 2^n}$ may be significant, as it may involve matrices of $\mathbb{C}^{2^n \times 2^n}$ having an exponential size for which the computation of tensor products, and as a consequence the decomposition requires an exponential computation time.

There is therefore a need for a method for computing tensor products of matrices of a Pauli operator basis with reduced computation complexity.

In particular, it is an object of the present subject disclosure to provide an improved method for computing tensor products of matrices of a Pauli operator basis, and apparatuses for implementing the same, that addresses the drawbacks and shortcomings of the conventional technology in the art.

Another object of the present subject disclosure is to provide an improved method for computing tensor products of matrices of a Pauli operator basis, and apparatuses for implementing the same, with reduced computation complexity and/or reduced computation time.

Another object of the present subject disclosure is to provide an improved method for computing a decomposition of an input matrix in a Pauli operator basis, and apparatuses for implementing the same, with reduced computation complexity and/or reduced computation time.

To achieve these objects and other advantages and in accordance with the purpose of the present subject disclosure, as embodied and broadly described herein, in one aspect of the present subject disclosure, a computer-implemented method for processing, on a computer (for example a non-quantum computer), (quantum) data that represent one or more tensor products of matrices of the set $S = \{I, X, Y, Z\}$, wherein $I$ is a $2 \times 2$ identity matrix, and $X, Y, Z$ are the following Pauli matrices: $X = \begin{bmatrix} 0 & 1 \\ 1 & 0 \end{bmatrix}$, $Y = \begin{bmatrix} 0 & -i \\ i & 0 \end{bmatrix}$, and $Z = \begin{bmatrix} 1 & 0 \\ 0 & -1 \end{bmatrix}$ is proposed.

The proposed method may comprise: generating a data tree as a data structure that represents the one or more tensor products, with the one or more tensor products respectively corresponding to one or more paths of the data tree, a path of the data tree running from a root node of the data tree to a leaf of the data tree (for example, each path may run from a root node of the data tree to a leaf of the data tree); and determining the one or more tensor products by performing a tree exploration of the generated data tree.

The proposed method may advantageously be used for computing one or more tensor products of a Pauli operator basis $\wp_n$ of size $n \in \mathbb{N}^*$, wherein $\wp_n$ comprises tensor products of $n$ matrices of the set $S = \{I, X, Y, Z\}$, with reduced computational complexity and therefore reduced computation time. In some embodiments, the Pauli operator basis may comprise all the possible tensor products of $n$ matrices of the set $S = \{I, X, Y, Z\}$: $\wp_n = \{\otimes_n M_n, M_n \in \{I, X, Y, Z\}\}$. In such embodiments, the proposed method may comprise: generating a data tree as a data structure that represents the one or more tensor products of the Pauli operator basis $\wp_n$, wherein the one or more tensor products respectively correspond to one or more paths of the data tree, a path of the data tree running from a root node of the data tree to a leaf of the data tree (for example, each path may run from a root node of the data tree to a leaf of the data tree); and determining the one or more tensor products of the Pauli operator basis $\wp_n$ by performing a tree exploration of the generated data tree.

The proposed method advantageously exploits similarities between matrices of the set S comprising Pauli matrices $X, Y,$ and $Z$ and the identity matrix $I$, by using a tree structure for computing tensor products of Pauli matrices of this set with reduced computational complexity, which allows tackling the computation of tensor products of large numbers $n$ of matrices of the set S, n being large (e.g. $n = 13$ or $14$) as compared to what conventional methods can address. Using a tree structure allows avoiding unnecessary computations by determining the tensor products through exploring the tree, which leads to a non-exponential computational complexity. As a consequence, the proposed scheme can advantageously be used for performing quantum computations in $n$-qbits systems where $n$ is large, for example where such computations require decomposing an input data matrix A of size $\mathbb{C}^{2^n \times 2^n}$ in a Pauli matrix basis.

Advantageously, the proposed method exploits the particular structure of Pauli matrices, and further uses a tree approach to avoid redundancy in the computations, which results in drastically decreasing the computation time.

In one or more embodiments, the generated data tree may comprise the root node and one or more levels with nodes. In some embodiments, one or more nodes (e.g. each node) in the tree, except for the root node, may be connected to only one parent node. In some embodiments, the root node may have no parent. In some embodiments, one or more nodes (e.g. each node) of the tree that is not a leaf may have one or more child nodes (for example up to 4 child nodes) respectively associated with matrices of the set of matrices $S = \{I, X, Y, Z\}$.

In one or more embodiments, one or more nodes (for example each node) of the data tree are respectively associated with a (for example a single one) matrix of the set of matrices $S = \{I, X, Y, Z\}$.

In one or more embodiments, one or more levels of the data tree, of respective index $I$, wherein $1 \leq I \leq n$, may comprise $4^I$ instances of the set of matrices $S = \{I, X, Y, Z\}$.

In one or more embodiments, the generating the data tree may further comprise: Generating a root node which is not associated with any matrix of the set $S = \{I, Z, Y, Z\}$. In some embodiments, the generating the data tree may further comprise: Performing $n$ iterations of a tree generation loop, wherein an iteration of index $I$ corresponding to a tree level comprises: for each node at level $I$, generating one or more (for example 4, or up to 4) child nodes respectively associated with a matrix of (a (partial) permutation of) the set $S = \{I, X, Y, Z\}$.

In some embodiments, the child nodes of a plurality of parent nodes of the generated data tree may form a sequence corresponding to a permutation of matrix elements of the set $S = \{I, X, Y, Z\}$.

In one or more embodiments, a tensor product of the one or more tensor products may be a matrix of size $2^n \times 2^n$, with a (e.g. each) line of index $j$ of the $2^n$ lines of the matrix having a single non-zero element at a column index $k[j]$, In some embodiments, the proposed method may further comprise: Processing a current node of the tree during the tree exploration. In some embodiments, the processing the current node may comprise: Determining $k$ values and $m$ values based on one or more of a tree level $I$ of the current node of the tree and a matrix of the set $S = \{I, X, Y, Z\}$ with which the current node is associated.

In one or more embodiments, the determining the $k$ values and the $m$ values may comprise: computing one or more of the $k$ values and the $m$ values depending on one or more of the matrices of the set $S = \{I, X, Y, Z\}$ which have in the tree the same parent node as the current node.

In one or more embodiments, a current node of the tree may be processed during the tree exploration based on a transition rule which defines the processing of the current node depending on one or more of a matrix of the set $S = \{I, X, Y, Z\}$ associated with the current node and a matrix of the set $S = \{I, X, Y, Z\}$ associated with a node of the tree processed prior to the current node.

In one or more embodiments, the proposed method may further comprise: Processing a current node of the tree during the tree exploration, the processing comprising: determining a sequence according to which child nodes of the current node are positioned in the data tree with respect to the current node; and processing the child nodes of the current node according to a processing sequence that corresponds to the determined sequence. In some embodiments, the processing of a child node of the current node may be based on the position of the child node in the processing sequence. In some embodiments, the processing of a child node of the current node may be based on a matrix of the set $S = \{I, X, Y, Z\}$ associated with a child node preceding said child node in the processing sequence.

In one or more embodiments, the proposed method may further comprise: performing matrix decomposition of an input matrix A of size $\mathbb{C}^{2^n \times 2^n}$ into a combination of Pauli operators $P_i$ of a set S of matrices comprising Pauli matrices $X$, $Y$, $Z$ and the 2 by 2 identity matrix $I$. In some embodiments, one or more (e.g. each) Pauli operator $P_i$ may be comprised in a Pauli operator basis Pauli operator basis $\wp_n$ comprising tensor products of $n$ Pauli matrices $X$, $Y$, $Z$ and the identity matrix $I$. In some embodiments, the matrix decomposition may comprise: determining one or more decomposition coefficients $a_i$ respectively corresponding to elements $P_i$ of the Pauli operator basis ($A = \Sigma_{Pi \in \wp n} \alpha_i P_i$) based on a proposed method for determining tensor products according to embodiments of the present subject disclosure.

In some embodiments, the determination of a decomposition coefficient $a_i$ may comprise: determining a tensor (Kronecker) product matrix corresponding to a $n$ -1 tensor (Kronecker) product of $n$ elements of the Pauli operator basis corresponding to the decomposition coefficient, and performing a matrix product of the tensor (Kronecker) product matrix and the input matrix A.

According to another aspect of the present subject disclosure, an apparatus (e.g. a processing node in a computer system) is proposed, which comprises a processor, and a memory operatively coupled to the processor. The proposed apparatus is configured to perform embodiments of the proposed method according to the present subject disclosure.

According to yet another aspect of the present subject disclosure, a non-transitory computer-readable medium encoded with executable instructions which, when executed on a computer, causes a processor of the non-quantum computer, that is operatively coupled with a memory, to perform embodiments of the proposed method according to the present subject disclosure, is proposed.

For example, in embodiments, the present subject disclosure provides a non-transitory computer-readable medium encoded with executable instructions which, when executed, causes an apparatus comprising a processor operatively coupled with a memory, to process, on a computer, data that represent one or more tensor products of matrices of the set $S = \{I, X, Y, Z\}$, wherein $I$ is a $2 \times 2$ identity matrix, and $X$, $Y$, $Z$ are the following Pauli matrices:

$$X = \begin{bmatrix} 0 & 1 \\ 1 & 0 \end{bmatrix}, \ Y = \begin{bmatrix} 0 & -i \\ i & 0 \end{bmatrix}, \text{ and } Z = \begin{bmatrix} 1 & 0 \\ 0 & -1 \end{bmatrix}$$, by generating, by the processor, a data tree as a data structure that represents the one or more tensor products, wherein the one or more tensor products respectively correspond to one or more paths of the data tree, a path of the data tree running from a root node of the data tree to a leaf of the data tree, and determining, by the processor, the one or more tensor products by performing a tree exploration of the generated data tree.

For example, in embodiments, the present subject disclosure provides a non-transitory computer-readable medium encoded with executable instructions which, when executed, causes an apparatus comprising a processor operatively coupled with a memory, to process, on a non-quantum computer, quantum data that represent one or more tensor products of a Pauli operator basis $\wp_n$ of size $n \in \mathbb{N}^*$, wherein $\wp_n$ comprises all the possible tensor products of n matrices of the set $S = \{I,X,Y,Z\}$ ($[\wp_n = \{\otimes_n M_n, M_n \in \{I,X,Y,Z\}\}]$), wherein I is a 2x2 identity matrix, and X, Y, Z are the following Pauli matrices: $$X = \begin{bmatrix} 0 & 1 \\ 1 & 0 \end{bmatrix}, \ Y = \begin{bmatrix} 0 & -i \\ i & 0 \end{bmatrix}, \text{ and } Z = \begin{bmatrix} 1 & 0 \\ 0 & -1 \end{bmatrix}$$, by generating, by the processor, a data tree as a data structure that represents the one or more tensor products of the Pauli operator basis $\wp_n$, wherein the one or more tensor products respectively correspond to one or more paths of the data tree each running from a root node of the data tree to a leaf of the data tree, and by determining, by the processor, the one or more tensor products of the Pauli operator basis $\wp_n$ by performing a tree exploration of the generated data tree.

According to yet another aspect of the present subject disclosure, a computer program product comprising computer program code tangibly embodied in a computer readable medium, said computer program code comprising instructions, when provided to a computer system and executed, cause said computer system to perform embodiments of the proposed method according to the present subject disclosure, is proposed.

In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

## Brief description of the drawings

The present subject disclosure will be better understood and its numerous objects and advantages will become more apparent to those skilled in the art by reference to the following drawings, in conjunction with the accompanying specification, in which:

Figure 1 is a block diagram illustrating an exemplary data processing method, according to embodiments of the present subject disclosure;
Figure 2a illustrates an exemplary tree data structure, according to embodiments of the present subject disclosure;
Figure 2b illustrates an exemplary tree data structure, according to embodiments of the present subject disclosure;
Figure 2c illustrates an exemplary tree data structure, according to embodiments of the present subject disclosure;
Figure 2d shows an exemplary tree generation algorithm, according to embodiments of the present subject disclosure;
Figure 3 illustrates an exemplary exploration routine of an exemplary data tree, according to embodiments of the present subject disclosure;
Figure 4a illustrates an exemplary algorithm for determining the tensor products of a n-dimensioned Pauli basis according to embodiments of the present subject disclosure;
Figure 4b illustrates an exemplary algorithm for exploring the tree data structure according to embodiments of the present subject disclosure;
Figure 4c illustrates an exemplary algorithm for updating the tree data structure according to embodiments of the present subject disclosure;
Figure 5 shows an exemplary set of transition rules according to embodiments of the present subject disclosure; and
Figure 6 is a diagram illustrating an exemplary architecture of a computer system for implementing the proposed method, according to embodiments of the present subject disclosure.

## Description of embodiments

The advantages, and other features of the components disclosed herein, will become more readily apparent to those having ordinary skill in the art form. The following detailed description of certain preferred embodiments, taken in conjunction with the drawings, sets forth representative embodiments of the subject technology, wherein like reference numerals identify similar structural elements.

For simplicity and clarity of illustration, the drawing figures illustrate the general manner of construction, and descriptions and details of well-known features and techniques may be omitted to avoid unnecessarily obscuring the discussion of the described embodiments of the subject disclosure. Additionally, elements in the drawing figures are not necessarily drawn to scale. For example, the dimensions of some of the elements in the figures may be exaggerated relative to other elements to help improve understanding of embodiments of the present subject disclosure. Certain figures may be shown in an idealized fashion in order to aid understanding, such as when structures are shown having straight lines, sharp angles, and/or parallel planes or the like that under real-world conditions would likely be significantly less symmetric and orderly.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose non quantum computer, special purpose non quantum computer or other programmable data processing apparatus to produce a machine, such that the computer program instructions or software code which execute on the non-quantum computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer. Examples of computer storage media include, but are not limited to, a flash drive or other flash memory devices (e.g. memory keys, memory sticks, key drive), CD-ROM or other optical storage, DVD, magnetic disk storage or other magnetic storage devices, memory chip, RAM, ROM, EEPROM, smart cards, Solid State Drive (SSD) devices or Hard Disk Drive (HDD) devices, or any other suitable medium from that can be used to carry or store program code in the form of instructions or data structures which can be read by a computer processor. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Visual Basic, HTML, PHP, Java, Javascript, Python, and bash scripting.

Unless specifically stated otherwise, it will be appreciated that throughout the following description discussions utilizing terms such as processing, computing, calculating, determining, generating, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements but may include other elements not expressly listed or inherent to such process, method, article, or apparatus.

The terms "quantum" or « quantum computing » as used in the present subject disclosure are intended to cover any computer, computing system, processing or computing operation, configured to use or exploit quantum mechanical phenomena. A computer, processor, calculator, computing system, computing node, computing task, computer job, processing, algorithm, and processing resource configured to use or exploit quantum mechanical phenomena will be referred to herein as "quantum" (a quantum computer, quantum processor, quantum calculator, quantum computing system, quantum computing node, quantum computing task, quantum computer job, quantum processing, quantum algorithm, and quantum processing resource, respectively. In contrast, a computer, processor, calculator, computing system, computing node, computing task, computer job, processing, algorithm, and processing resource which is not configured to use or exploit quantum mechanical phenomena may be referred to herein as "classical" or "non-quantum" (a classical computer, classical processor, classical calculator, classical computing system, classical computing system, classical computing node, classical computing task, classical computer job, classical algorithm, classical processing, classical processing resource, respectively). A quantum processor (also referred to herein as a quantum processing unit (or QPU)) may be configured to perform both quantum processing and classical processing.

Additionally, the word "exemplary" as used herein means serving as an example, instance, or illustration. Any aspect or design described herein as "exemplary" is not necessarily to be construed as preferred or advantageous over other aspects or designs.

In the present subject disclosure, the notation "$|0\rangle$" designates the quantum state "ket-zero".

In the present subject disclosure, the terms "tensor product" and "Kronecker product" may be used interchangeably to refer to a tensor product operation between 2 or more matrices, for example 2 or more $2 \times 2$ matrices with each of the matrix in the product corresponding to a matrix of the set $S = \{I, X, Y, Z\}$.

Quantum computing typically involve qubits undergoing one or more quantum logic gate operations.

In some applications, designing quantum algorithms for execution on a quantum computer require expressing matrices used by the algorithm in a suitable manner for execution on a quantum computer.

Pauli matrices are widely used in the field of quantum computing, for example for computing a Hamiltonian of a quantum system, which typically involve computing tensor products (sometimes referred to as Kronecker products) of n matrices of the set $S = \{I, X, Y, Z\}$ of 2-by-2 matrices comprising the identity matrix $I = \begin{bmatrix} 1 & 0 \\ 0 & 1 \end{bmatrix}$ and the $X, Y,$ and $Z$ Pauli matrices of complex numbers.

Pauli matrices (and the identity matrix) are 2-by-2 matrices which are used in both the quantum physics and quantum computing fields.

In some embodiments, one may therefore consider the following set $S = \{I, X, Y, Z\}$ of 2-by-2 matrices comprising the identity matrix:

$$I = \begin{bmatrix} 1 & 0 \\ 0 & 1 \end{bmatrix}$$

and the following $X, Y,$ and $Z$ Pauli matrices of complex numbers:

$$X = \begin{bmatrix} 0 & 1 \\ 1 & 0 \end{bmatrix}$$

$$Y = \begin{bmatrix} 0 & -i \\ i & 0 \end{bmatrix}$$

$$Z = \begin{bmatrix} 1 & 0 \\ 0 & -1 \end{bmatrix}$$

For example, the $X$ matrix applied to a quantum state operates to invert such quantum state, and the $Y$ matrix applied to a quantum state operates to invert such state with a phase shift of $+i$ or $-i$.

Based on the set $S = \{I, X, Y, Z\}$, a Pauli operator basis $\wp_n$ of size $n \in \mathbb{N}^*$ ($n$ being a non-nil natural integer that corresponds to operations performed in a quantum system of $n$-qubits) can be defined as all the possible tensor products of $n$ matrices of the set S:

$$\wp_n = \{\otimes_n M_n, M_n \in \{I, X, Y, Z\}\}$$

The Pauli operator basis $\wp_n$ is a basis of $\mathbb{C}^{2^n \times 2^n}$, so that any matrix $A$ of $\mathbb{C}^{2^n \times 2^n}$ can be decomposed in this basis, as a linear combination of elements of this basis:

$$A = \sum_{P_i \in \wp_n} \alpha_i \cdot P_i$$

With $P_i \in \wp_n$, and $\alpha_i \in \mathbb{C}$ are decomposition complex coefficients.

In the present subject disclosure, the set $S = \{I, X, Y, Z\}$ may sometimes be denoted $\sigma_{\{0,1,2,3\}}$, and the set $S' = \{I, X, iY, Z\}$ may sometimes be denoted $\tilde{\sigma}_{\{0,1,2,3\}}$.

In one or more embodiments, determining the result of the Kronecker (tensor) product operations between $n$ matrices of the set $S = \{I, X, Y, Z\} \left( \bigotimes_{i=0}^{n-1} M_i \right)$ for purposes of determining one or more decomposition coefficient may comprise determining a Pauli string matrix (sometimes referred to herein as a "Tensor product matrix" or a "Kronecker product matrix").

Given an input Pauli string $x = x_{n-1} ... x_0 \in \{0,1,2,3\}^n$ (which may for example correspond to $n$ qubits), the tensor (Kronecker) product matrix corresponding to $n$ - 1 tensor (Kronecker) products between $n$ matrices of the set $S = \{I,X,Y,Z\}$ may be denoted $P(x)$ and expressed as follows:

$$P(x) = \sigma_{x_{n-1}} \otimes \sigma_{x_{n-2}} \otimes ... \otimes \sigma_{x_0}$$

The matrix $P(x)$ being of size $\mathbb{C}^{2^n \times 2^n}$, its matrix elements may be denoted $P_{j,k}(x)$, with $j, k \in \{0, ..., 2^n - 1\}$.

The matrix $P(x)$ being a Pauli operator, for each row there will be only one column with a non-zero element. Given a row index $j$, the column index of the non-zero element is denoted $k[j]$, and the value of the non-zero element is denoted $m[j]$ ($P_{j,k[j]}(x) = m[j]$).

Therefore, in some embodiments, given an input Pauli string $x = x_{n-1} ... x_0 \in \{0,1,2,3\}^n$, a Tensor Product Matrix $P(x)$ corresponding to the input Pauli string $x$ may be determined based on a tensor product of $n$ matrices of the set $S = \{I,X,Y,Z\}$ corresponding to the input string $x$.

The $Y$ Pauli matrix being the only Pauli matrix which contains imaginary coefficients, a computation involving all Pauli matrices of the set S would require to manipulate coefficients equal to 1, -1, $i$ and $-i$.

In some embodiments, in order to simplify the determination of the P(x) matrix that would otherwise involve using a $Y$ Pauli matrix, the determination may be made using the $iY$ matrix instead of the $Y$ matrix.

In some embodiments, a $n$ - 1 Kronecker product operation between $n$ matrices of the set $S' = \{I,X,iY,Z\}$ may be denoted $\tilde{P}(x)$ and determined as follows:

$$\tilde{P}(x) = \tilde{\sigma}_{x_{n-1}} \otimes \tilde{\sigma}_{x_{n-2}} \otimes ... \otimes \tilde{\sigma}_{x_0}$$

The matrix $\tilde{P}(x)$, which may be constructed by switching from the set $\sigma_{\{0,1,2,3\}}$ to the set $\tilde{\sigma}_{\{0,1,2,3\}}$, may sometimes be referred herein to as a "Real Tensor Product Matrix".

In some embodiments, the $P(x)$ matrix may be determined based on the $\tilde{P}(x)$ matrix, for example through the following equation:

$$P(x) = (-i)^{n_Y \bmod 4} \cdot \tilde{P}(x)$$

Where $n_Y$ corresponds to the number of $Y$ operators in the matrix P(x).

Therefore, in some embodiments, given an input Pauli string $x = x_{n-1} ... x_0 \in \{0,1,2,3\}^n$, a Real Tensor Product Matrix $\tilde{P}(x)$ corresponding to the input Pauli string may be determined based on a tensor product of $n$ matrices of the set $S' = \{I,X,iY,Z\}$ corresponding to the input string $x$. Further, a Tensor Product Matrix P(x) corresponding to the input Pauli string $x$ may be determined based on the Real Tensor Product Matrix $\tilde{P}(x)$, for example through the following equation:

$$P(x) = (-i)^{n_Y \bmod 4} \cdot \tilde{P}(x)$$

Where $n_Y$ corresponds to the number of $Y$ operators in the matrix $P(x)$.

In the following, a scheme for determining a Tensor Product Matrix $P(x)$ for a given input string $x$ using a data tree structure according to one or more embodiments of the present subject disclosure is described.

In some embodiments, the proposed scheme may be used for determining a Real Tensor Product Matrix $\tilde{P}(x)$ for a given input string $x$ using a data tree structure, and a Tensor Product Matrix $P(x)$ may be determined for the input string $x$ based on the Real Tensor Product Matrix $\tilde{P}(x)$.

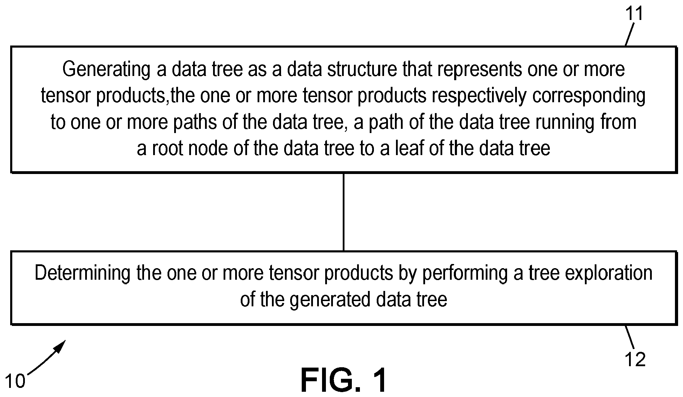

Fig. 1 is a block diagram illustrating an exemplary data processing method (10), according to embodiments of the present subject disclosure.

In one or more embodiments, one or more tensor products of a Pauli operator basis $\wp_n$ of size $n \in \mathbb{N}^*$ may be determined by using a data tree structure. The Pauli operator basis may comprise all the possible tensor products of n matrices of the set $S = \{I,X,Y,Z\}$ ($\wp_n$ may be expressed as $\wp_n = \{\otimes_n M_n, M_n \in \{I,X,Y,Z\}\}$), wherein $I$ is a 2x2 identity matrix, and $X$, $Y$, $Z$ are the following Pauli matrices:

$$X = \begin{bmatrix} 0 & 1 \\ 1 & 0 \end{bmatrix}, Y = \begin{bmatrix} 0 & -i \\ i & 0 \end{bmatrix}, \text{ and } Z = \begin{bmatrix} 1 & 0 \\ 0 & -1 \end{bmatrix}.$$

In one or more embodiments, a data tree may be generated (11) as a data structure that represents the one or more tensor products (e.g. of the Pauli operator basis $\wp_n$) to be determined. In some embodiments, the one or more tensor products may respectively correspond to one or more paths of the data tree each running from a root node of the data tree to a leaf of the data tree.

In one or more embodiments, the one or more tensor products (e.g. of the Pauli operator basis $\wp_n$) may be determined (11) by performing a tree exploration of the generated data tree.

The tree exploration routine may be designed to take advantage of the proximity of the matrices of the set S (or, depending on the embodiment, of the set 5') with each other, thereby advantageously resulting in a faster execution on a computer system than using an iterative scheme for calculating all of the one or more tensor products.

In the following, embodiments of the present subject disclosure are described in the exemplary case where matrices of the set $S = \{I, X, Y, Z\}$ are used (for generating a data tree which is then explored in order to compute one or more tensor products). However, a person of ordinary skill in the art would understand that the processes, apparatuses and computer programs of the present subject disclosure may be implemented based on any suitable set of matrices based on the matrices of the set S, such as for example the set $S' = \{I, X, iY, Z\}$, and that such proposed processes, apparatuses and computer programs of the present subject disclosure are not limited to the direct use of the specific set $S = \{I, X, Y, Z\}$, which is provided as an example only. In some embodiments, the generated data tree may comprise the root node and one or more levels with nodes. In some embodiments, each node in the tree, except for the root node, may be connected to only one parent node. Further, in some embodiments, the root node may have no parent.

In one or more embodiments, one or more nodes of the tree (except for the root) may be associated with one or more of the matrices of the set $S = \{I, X, Y, Z\}$ (or, depending on the embodiment, of the set $S'$ or any other set of matrices based on the matrices of the set S). In some embodiments, each node of the tree (except for the root) may be associated with one or more of the matrices of the set $S = \{I, X, Y, Z\}$ (or, depending on the embodiment, of the set $S'$ or any other set of matrices based on the matrices of the set S).

In some embodiments, one or more nodes of the tree (except for the root) may be associated with one of the matrices of the set $S = \{I,X,Y,Z\}$ (or, depending on the embodiment, of the set $S'$ or any other set of matrices based on the matrices of the set S). In some embodiments, each node of the tree (except for the root) may be associated with one of the matrices of the set $S = \{I,X,Y,Z\}$ (or, depending on the embodiment, of the set $S'$ or any other set of matrices based on the matrices of the set S).

For example, in some embodiments, each node of the tree that is not a leaf may have up to 4 child nodes respectively associated with the matrices of the set of matrices $S = \{I, X, Y, Z\}$ (or, depending on the embodiment, of the set $S'$ or any other set of matrices based on the matrices of the set S).

In one or more embodiments, a tree data structure that represents one or more Pauli operators of the Pauli operator basis $\wp_n$ of size

$$n \in \mathbb{N}^* \; (\wp_n = \{\otimes_n M_n, M_n \in$$

$\{I,X,Y,Z\}\}$) may be generated. For example, in some embodiments, a tree data structure that represents all the possible Pauli operators of the Pauli operator basis $\wp_n$ of size

$$n \in \mathbb{N}^* \ (\wp_n = \{\otimes_n M_n, M_n \in \{I, X, Y, Z\}\})$$

may be generated.

In some embodiments, the generated tree may start with a root node which may not be associated with any of the Pauli matrices ($X, Y, Z, I$), and may comprise one or more (e.g. $n + 1$) levels ($n$ levels 1 to $n$ besides that of the root node which corresponds to level 0) with nodes.

In some embodiments, the tree may be generated with a largest depth (not taking into account the level 0 of the root node) determined based on (e.g. equal to) the largest number of matrices whose tensor product is to be determined.

For example, in some embodiments, the tree may be generated with a depth (not taking into account the level 0 of the root node) determined based on (e.g. equal to) the size $n$ of the Pauli operators (for example in the basis $\wp_n$).

In some embodiments, each node of the tree that is not a leaf (a leaf being a node with no child node), may have 4 child nodes respectively associated with the matrices of the set $S$.

In embodiments where each node having child nodes has 4 child nodes respectively associated with one of the matrices of the set $S = \{I, X, Y, Z\}$ (or, depending on the embodiment, of the set $S'$ or any other set of matrices based on the matrices of the set $S$), one or more levels of the data tree, of respective index $l$, wherein $1 \leq l \leq n$, may comprise $4^l$ instances of the set of matrices $S = \{I, X, Y, Z\}$ (or, depending on the embodiment, of the set $S'$ or any other set of matrices based on the matrices of the set $S$).

In some embodiments, one or more nodes in the tree (for example each node in the tree), except for the root node, may be connected to only one parent node, and the root node may have no parent.

In embodiments wherein the set of matrices $S'$ is used instead of $S$, each node of the tree that is not a leaf (a leaf being a node with no child node), may have one or more (for example up to 4) child nodes respectively associated with the matrices of the set $S'$.

In some embodiments, the tree may therefore be a N-ary tree, with N being equal to the number of Pauli matrices ($N = 4$).

In some embodiments, each node of the tree that is not a leaf and that is not the root node may be a data structure that comprises a reference to a ($2 \times 2$) matrix of a set comprising the identity matrix $I$ and the Pauli matrices ($X, Y, Z$), thereby creating an association between the node and one of the matrix of a set comprising the identity matrix $I$ and the Pauli matrices ($X, Y, Z$), and a list of references to its one or more (for example up to 4) child nodes (the child nodes may advantageously be chosen distinct from each other) respectively associated matrices of the set comprising the identity matrix I and the Pauli matrices ($X, Y, Z$).

In some embodiments, the generated tree may start with a root node which is not associated with any matrix of the set $S$ (or, depending on the embodiment, of the set $S'$), and each node of the generated tree may have one or more child nodes (for example 4 child nodes, that is, one for each matrix I, X, Y, and Z), until the level $n$ (corresponding to depth 0) of the tree is reached, with the final (last generated) nodes (which each may be associated with one of the matrices $I, X, Y, Z$) becoming leaves of the generated tree.

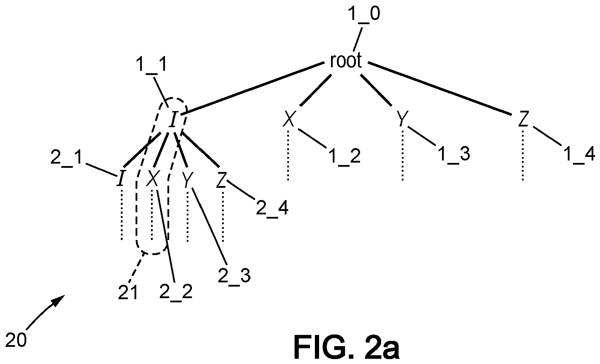

Fig. 2a shows a partial view of an exemplary tree data structure (20) according to one or more embodiments.

Shown on Fig. 2a is a tree that comprises a root node (1_0) at level 0, 4 nodes (1_1, 2_1, 3_1, 4_1) having the root node (1_0) as parent node at level 1, the 4 nodes of level 1 being respectively associated with the Pauli matrices ($I, X, Y, Z$) (that is, the node (1_1) is associated with the identity matrix, the node (2_1) is associated with the Pauli matrix $X$, the node (3_1) is associated with the Pauli matrix $Y$, and the node (4_1) is associated with the Pauli matrix $Z$), and each of the 4 nodes of level 1 having 4 child nodes at level 2 that are also respectively associated with the Pauli matrices ($I, X, Y, Z$). For example, the node (1_1) associated with the Pauli matrix I at the first level has four child nodes (at level 2), consisting of a first child node (1_2) associated with $I$, a second child node (2_2) associated with $X$, a third child node (3_2) associated with $X$, and a fourth child node (4_2) associated with $X$.

In one or more embodiments, a path of the generated data tree connecting a node at level 1 to a leaf of the tree corresponds to a Pauli operator of the Pauli operator basis $\wp_n$ of size

$$n \in \mathbb{N}^* \ (\wp_n = \{\otimes_n M_n, M_n \in \{I, X, Y, Z\}\}).$$

That is, the generated tree may be a data structure that represents all the possible Pauli operators of the Pauli operator basis $\wp_n$ of size

$$n \in \mathbb{N}^* \ (\wp_n = \{\otimes_n M_n, M_n \in \{I, X, Y, Z\}\})$$

through its paths. For example, the path (21) shown on Fig. 2a corresponds to all the Pauli operators (of size n) of the Pauli operator basis $\wp_n$ ending with $... \otimes X \otimes I$.

In one or more embodiments, the tree may be generated by first creating the root node which is not associated with any Pauli matrix, and running $n$ iterations ($n + 1$ being the depth of the tree with $n$ corresponding to the size of the Pauli operator basis to be represented by the tree) of a tree generation loop, each $k$ - $th$ iteration comprising operations to create all the tree nodes of level $k$ (comprising generating 4 child nodes respectively associated with the matrices $I, X, Y, Z$ for each node of the preceding level $k$ - 1), or running iterations of the tree generation loop until the last iteration corresponding to the depth n is completed.

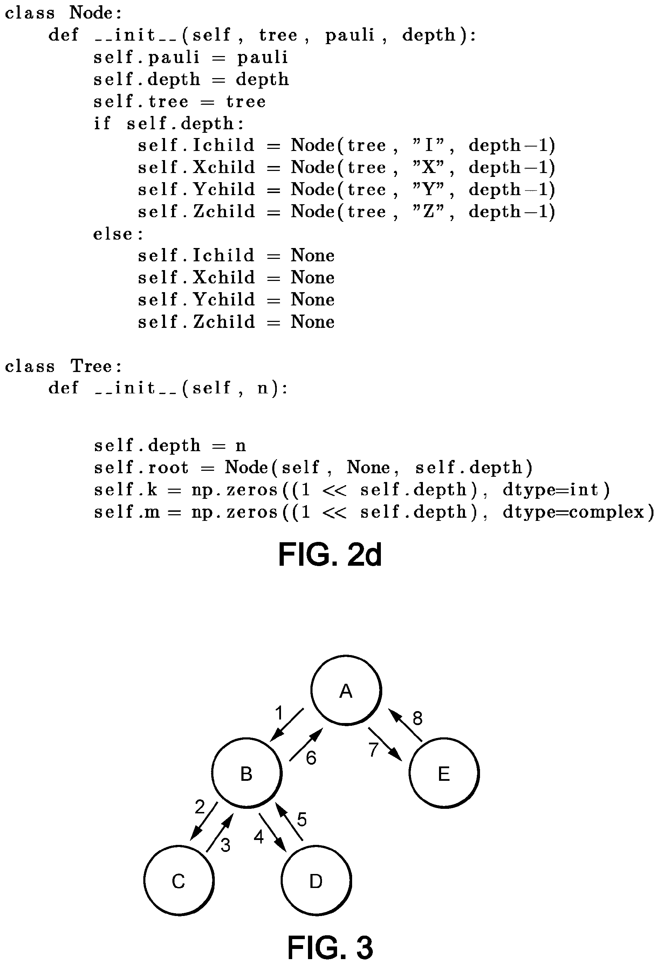

In other embodiments, the tree may be generated using recursive node creation function calls, according to which a node of depth $k$ may recursively create its child nodes (of depth $k$ - 1), as illustrated by the exemplary tree generation algorithm shown on Fig. 2d.

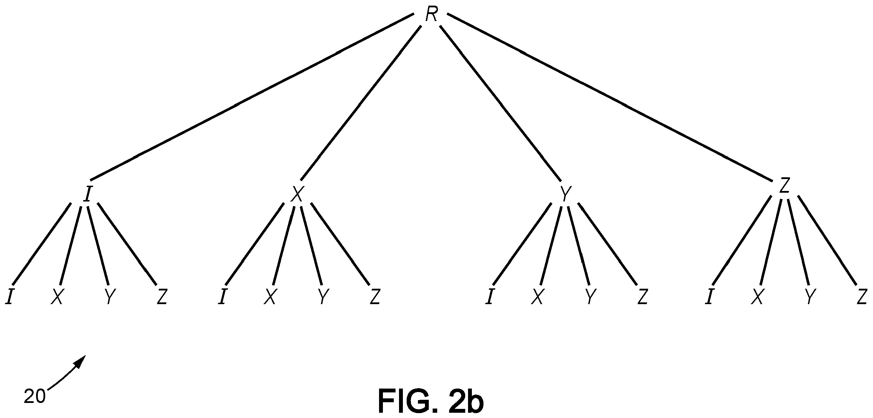

Fig. 2b shows another exemplary tree data structure (20) according to one or more embodiments.

The exemplary tree shown on Fig. 2b corresponds to the case where $n = 2$.

In the exemplary tree shown on Fig. 2a, each node which is not a leaf node has four child nodes ordered according to the ordered sequence $I, X, Y, Z$. Each path of the tree spanning from a level 1 node to a leaf node may be viewed as representing a tensor product $M_i \otimes M_j$, with $M_i$ and $M_j$ being elements of the set $S = \{I,X,Y,Z\}$.

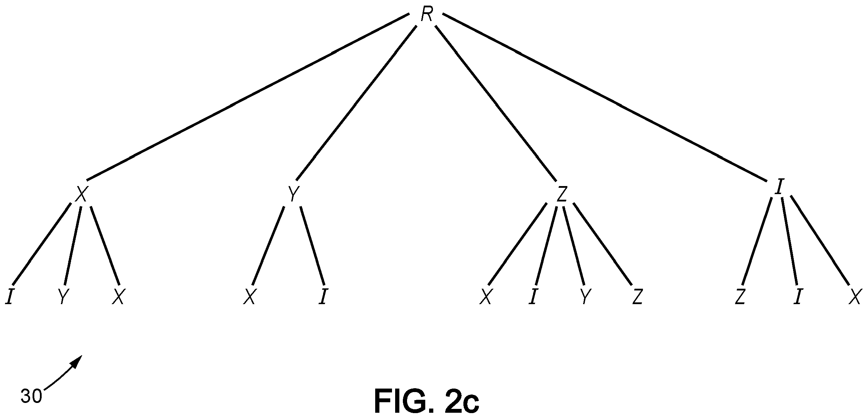

Fig. 2c shows another exemplary tree data structure (30) according to one or more embodiments.

The exemplary tree shown on Fig. 2c corresponds to another case where $n = 2$.

In some embodiments, the tree generation routine may determine the tensor products that are represented by the tree paths. For example, the tree may be built according to a scheme in which the elements near the root correspond to the last matrices in a tensor product, while the elements near the leaves are associated to first matrices in the tensor product.

The exemplary tree shown on Fig. 2c may be generated in embodiments where the following tensor products of matrices of the set $S = \{I,X,Y,Z\}$ are to be determined: $I \otimes X, Y \otimes X, X \otimes X, X \otimes Y, I \otimes Y, X \otimes Z, I \otimes Z, Y \otimes Z, Z \otimes Z, Z \otimes I, I \otimes I$, and $X \otimes I$. Each path of the tree spanning from a leaf node to a level 1 node may be viewed as representing a tensor product $M_i \otimes M_j$, with $M_i$ and $M_j$ being elements of the set $S = \{I,X,Y,Z\}$.

In other embodiments, the exemplary tree shown on Fig. 2c may be generated for the following tensor products of matrices of the set $S = \{I,X,Y,Z\}$ to be determined: $X \otimes I, X \otimes Y, X \otimes X, Y \otimes X, Y \otimes I, Z \otimes X, Z \otimes I, Z \otimes Y, Z \otimes Z, I \otimes Z, I \otimes I$, and $I \otimes X$. Each path of the tree spanning from a level 1 node to a leaf node may be viewed as representing a tensor product $M_i \otimes M_j$, with $M_i$ and $M_j$ being elements of the set $S = \{I,X,Y,Z\}$.

In the exemplary tree shown on Fig. 2c, each node which is not a leaf node has one or more of four child nodes respectively corresponding to one of the matrices of the set $S = \{I,X,Y,Z\}$, and are not ordered according to any ordered sequence at various levels. For example, at level $l = 2$, a node corresponding to the matrix $X$ has three child nodes ordered according to the sequence $I, Y, X$, a node corresponding to the matrix $Y$ has two child nodes ordered according to the sequence $X, I$, a node corresponding to the matrix $Z$ has four child nodes ordered according to the sequence $X, I, Y, Z$, and a node corresponding to the matrix $I$ has three child nodes ordered according to the sequence $Z, I$, and $X$.

Using the ordered sequence $I, X, Y, Z$ for generating the four child nodes of each node of the tree which is not a leaf node advantageously leads to a data tree in which the leftmost path is only populated with $I$ nodes, so that it represents the tensor product of n I matrices ($\otimes_n I$), which can be easily determined and then used as first computed tensor product for initializing the tree exploration routine.

In one or more embodiments, the child nodes of a plurality of parent nodes of the generated data tree may form a sequence corresponding to a permutation of matrix elements of the set $S = \{I, X, Y, Z\}$ (or, depending on the embodiment, of the set $S$' or any other set of matrices based on the matrices of the set $S$).

In some embodiments, the sequence may correspond to a processing sequence defining an order in which the child nodes are processed for determining tensor products of Pauli operators (e.g. of the Pauli basis).

For example, in some embodiments, one or more nodes of the tree which each are a parent node may each have 4 child nodes which are respectively associated with matrix elements of the set $S = \{I, X, Y, Z\}$ (or, depending on the embodiment, of the set S' or any other set of matrices based on the matrices of the set $S$), and the tree may be generated so that the child nodes of a plurality of parent nodes forms a sequence corresponding to one of the 4! permutations of matrix elements of the set $S = \{I, X, Y, Z\}$ (or, depending on the embodiment, of the set S' or any other set of matrices based on the matrices of the set $S$), such as for example $I, X, Y, Z, I, Z, Z, Y$, or $Y, Z, I, X$.

In one or more embodiments, the child nodes of all of the parent nodes of the generated data tree may form a sequence corresponding to a permutation of matrix elements of the set $S = \{I, X, Y, Z\}$ (or, depending on the embodiment, of the set S' or any other set of matrices based on the matrices of the set $S$). In some embodiments, the sequence may correspond to a processing sequence defining an order in which the child nodes are processed for determining tensor products of the Pauli basis. Fig. 2b provides an illustration of this exemplary situation in the exemplary simplified case of $n = 2$, as each parent node has four child nodes which are ordered in the following sequence: $I, X, Y, Z$.

However, depending on the embodiment, any permutation of the set $S = \{I, X, Y, Z\}$ (or, depending on the embodiment, of the set $S$' or any other set of matrices based on the matrices of the set $S$) may be used for generating the four child nodes of each parent node of the tree.

In one or more embodiments, the data tree may be generated according to the following method:

Generating a root node which is not associated with any matrix of the set $S = \{I, X, Y, Z\}$ (or, depending on the embodiment, of the set $S$' or any other set of matrices based on the matrices of the set $S$);

Performing $n$ iterations of a tree generation loop, wherein an iteration of index $I$ corresponding to a tree level comprises: for each node at level $I$, generating 4 child nodes respectively representing matrices of a permutation of the set $S = \{I, X, Y, Z\}$ (or, depending on the embodiment, of the set $S$' or any other set of matrices based on the matrices of the set $S$).

In one or more embodiments, the data tree may be generated according to the following method:

Generating a root node which is not associated with any matrix of the set $S = \{I, X, Y, Z\}$ (or, depending on the embodiment, of the set $S$' or any other set of matrices based on the matrices of the set $S$);

Performing $n$ iterations of a tree generation loop, wherein an iteration of index $I$ corresponding to a tree level comprises: for each node at level $I$, generating one or more (e.g. 4) child nodes respectively representing, depending on the embodiment, a respective sequence corresponding to a respective permutation of the elements of the set $S$ (or, depending on the embodiment, of the set $S$' or any other set of matrices based on the matrices of the set $S$), or a predefined unique sequence corresponding to a given permutation of the elements of the set $S$ (or, depending on the embodiment, of the set $S$' or any other set of matrices based on the matrices of the set $S$) (e.g. the sequence of matrices $I, X, Y,$ and $Z$).

Fig. 2d shows an exemplary tree generation algorithm which may be used in one or more embodiments.

The exemplary algorithm of Fig. 2d provides a simplified exemplary implementation of a tree data structure that may be used in one or more embodiments.

In one or more embodiments, a data tree structure *Tree* may be built (generated) using computer code classes as shown in the exemplary algorithm of Fig. 2d (for which any suitable attributes and methods, in addition to that shown on Fig. 2d, may be defined). For example, in some embodiments, the tree root may be initialized as a *None Pauli* node using a class *Tree.* Further, the nodes of the tree may be built recursively using a class *Node* by calling a *Node* constructor with *"depth* - 1" as depth until *depth* = 0.

A person of ordinary skill in the art would understand that the processes, apparatuses and computer programs of the present subject disclosure may be implemented based on any suitable data tree structure generation scheme, and that such proposed processes, apparatuses and computer programs of the present subject disclosure are not limited to the use of any specific data tree structure generation scheme, and in particular to each of the exemplary data tree structure generation scheme shown on Fig. 2d, which is provided as an example only.

In one or more embodiments, an exploration (also called traversal) of the generated tree may be performed in order to determine the one or more elements of the Pauli operator basis $\wp_n$ to be determined.

In some embodiments, an in-order traversal of the generated tree may be performed in order to reduce the number of elementary operations needed to iterate over the Pauli operator basis through exploiting the redundancy of information from one matrix element of the set $S$ (or, depending on the embodiment, of the set $S$' or any other set of matrices based on the matrices of the set $S$) to another one.

In one or more embodiments, a processing of a current node of the tree may be performed during the tree exploration and may comprise the determining a sequence according to which child nodes of the current node are positioned in the data tree with respect to the current node, and the processing the child nodes of the current node according to a processing sequence that corresponds to the determined sequence.

Performing the processing of the child nodes according to a processing advantageously allows exploiting the redundancy of information from one matrix element of the set $S$ (or, depending on the embodiment, of the set $S$' or any other set of matrices based on the matrices of the set $S$) to another one. For example, the processing of a child node which is associated with the $X$ matrix of the set $S$ (or, depending on the embodiment, of the set $S$' or any other set of matrices based on the matrices of the set $S$) may be different depending on whether the child node is the first among the child nodes to be processed, or is the second, the third or the fourth among the child nodes to be processed.

In some embodiments, the processing of a child node may be based on the position of such child node in the processing sequence.

In some embodiments, the processing of a child node may be (dynamically) adapted to the matrix element of the set $S$ (or, depending on the embodiment, of the set $S$' or any other set of matrices based on the matrices of the set $S$) associated with a child node preceding such child node in the processing sequence so as to be based on this matrix element. For example, the processing of a child node associated with a Pauli matrix $X$ may be different depending on whether the immediately preceding child node in the processing sequence of child nodes (of the same parent node), if any, is associated with an identity matrix *I,* a Pauli matrix *Y,* or a Pauli matrix *Z*.

In some embodiments, the tree may be generated to prepare for the use of one or more processing sequences of the child nodes of each parent node of the tree, which processing sequences may each be designed to exploit the redundancy of information from one Pauli operator to another one.

In one or more embodiments, the exploration of the generated tree may be configured in order to process one or more nodes of the tree according to a processing sequence of the child nodes of a given parent node. In some embodiments, such processing sequence may correspond to the sequence of such child nodes resulting from the generation of the child nodes of the given parent node. For example, referring back to Fig. 2a, the child nodes of parent node 1_1 may be processed according to the following processing sequence: *I, X, Y, Z.* That is, among the child nodes of the parent node 1_1, the child node 2_1 associated with an I matrix may be processed first, other nodes that are not child nodes of the parent node 1_1 may (or not, depending on the embodiment) be processed, the child node 2_2 associated with an *X* Pauli matrix may be processed second, other nodes that are not child nodes of the parent node 1_1 may (or not, depending on the embodiment) be processed, the child node 2_3 associated with an *Y* Pauli matrix may be processed third, other nodes that are not child nodes of the parent node 1_1 may (or not, depending on the embodiment) be processed, and lastly the child node 2_4 associated with an *Y* Pauli matrix may be processed fourth.

In one or more embodiments, the exploration of the generated tree may be configured so that the processing of the child nodes of a parent node may be performed according to a processing sequence of processing such child nodes that corresponds to the sequence according to which the child nodes are positioned in the tree. In some embodiments, the processing of the nodes performed during exploration of the tree may be configured to determine a sequence (of the matrices of the set *S* (or, depending on the embodiment, of the set *S'* or any other set of matrices based on the matrices of the set *S*) associated with the child nodes) according to which the child nodes are positioned in the tree with respect to their parent node, so that such child nodes may be processed according to a processing sequence that corresponds to the determined sequence according to which the child nodes are positioned in the tree.

For example, referring to Fig. 2a, the exploration of the tree 20 may be configured so that the processing of the parent node 1_1 may comprise the determining a sequence (of the matrices of the set *S* (or, depending on the embodiment, of the set S' or any other set of matrices based on the matrices of the set *S*) according to which the child nodes 2_1, 2_2, 2_3, 2_4 are positioned in the tree with respect to their parent node 1_1. In such case, the determined sequence may be *I, X, Y,* and *Z*. The child nodes 2_1, 2_2, 2_3, 2_4 may be processed based on this determined sequence, in that they may be processed according to a processing sequence : among the child nodes in the sequence of child nodes 2_1, 2_2, 2_3, 2_4 respectively associated with the matrices *I, X, Y,* and *Z*, the node associated with the matrix *I* may be processed first, then the node associated with the matrix *X* may be processed second, then the node associated with the matrix *Y* may be processed third, then finally the node associated with the matrix *Z* may be processed last among the 4 nodes of this set of child nodes. In another exemplary case in which the determined sequence would have corresponded to a different sequence of the matrices of the set *S*, such as for example *X, I, Z, Y,* the node associated with the matrix *X* may be processed first, then the node associated with the matrix *I* may be processed second, then the node associated with the matrix *Z* may be processed third, then finally the node associated with the matrix *Y* may be processed last among the 4 nodes of this set of child nodes.

For example, in some embodiments, the following data tree exploration routine may be performed for exploration of the data tree generated according to embodiments of the present subject disclosure:

Starting at one of the four nodes at level 1 (one) of the tree (the root node being at level 0), for example at the leftmost node at level 1 (one) of the tree, an initial path of the tree is explored by considering for each node at level *l* the leftmost child node of the node at level *l*, until a leaf node at level *n* is reached.

Once the initial path has been explored, the tree exploration routine iteratively performs the following actions for a currently explored node (referred to as the "current node" in the following):

Determine whether the current node is a leaf node;
In case it is determined that the current node is a leaf node, update the current node with the node parent of the current node;
In case it is determined that the current node is not a leaf node:

For each of the four child nodes of the current node considered from left to right, determine whether the child node has been explored.
For the first child node of the current node determined as not explored, update the current mode with the child node of the current node.

Fig. 3 shows an exemplary exploration routine of an exemplary data tree according to one or more embodiments.

The data tree of Fig. 3 is a non-limiting example of part of a data tree that may be generated according to the present subject disclosure, and is represented merely to illustrate a simplified example of data tree exploration routine.

As shown in Fig. 3, an exemplary inorder walk through the exemplary data tree shown on the Figure may start from a node "A" and explore all of the nodes "B", "C", "D", and "E" according to the arrows 1 to 8:
The node "A" may first be explored. followed by the node "B".

As the node "A" has at least one child that has not yet been explored, the leftmost child node of "A" that has not yet been explored, that is, node "B", may then be explored.

As the node "B" has at least one child that has not yet been explored, the leftmost child node of "B" that has not yet been explored, that is, node "C", may then be explored.

As the node "C" has no child node, once the node "C" explored the exploration may proceed to its single parent node, that is, node "B", which will have already been explored.

As the node "B" has at least one child that has not yet been explored, the leftmost child node of "B" that has not yet been explored, that is, node "D", may then be explored.

As the node "D" has no child node, once the node "D" explored the exploration may proceed to its single parent node, that is, node "B", which will have already been explored.

As the node "B" has no child that has not yet been explored, once the node "B" explored the exploration may proceed to its single parent node, that is, node "A", which will have already been explored.

As the node "A" has at least one child that has not yet been explored, the leftmost child node of "A" that has not yet been explored, that is, node "E", may then be explored.

As the node "E" has no child node, once the node "E" explored the exploration may proceed to its single parent node, that is, node "A", which will have already been explored.

As the node "A" has no child that has not yet been explored, the exploration routine may end.

In some embodiments, the data tree structure generated according to embodiments of the present disclosure may represent tensor products of matrices of the set $S$ (or, depending on the embodiment, of the set $S'$ or any other set of matrices based on the matrices of the set S) (for example (all of the) tensor products of the Pauli operator basis $\wp_n = \{\otimes_n M_n, M_n \in \{I, X, Y, Z\}\}$), a path from a node of level 1 (the root node being at level 0) to a leaf node corresponding to a tensor product of (e.g. a given number $n$) matrices of the set S (or, depending on the embodiment, of the set $S'$ or any other set of matrices based on the matrices of the set $S$), that is, to a Tensor Product Matrix $P(x)$ or, depending on the embodiment, to a tensor product of (e.g. a given number $n$) matrices of the set S', that is, to a Real Tensor Product Matrix $\tilde{P}(x)$.

In one or more embodiments, the computation of a $2^n \times 2^n$ Tensor Product Matrix $P(x)$ (or, depending on the embodiment, of a $2^n \times 2^n$ Real Tensor Product matrix $\tilde{P}(x)$) may be performed by determining for each row $j$ ($1 \leq j \leq 2^n$) the column number $k[j]$ of the single non-zero element, as well as the value $m[j]$ of such non-zero element, through exploration of the generated tree.

In one or more embodiments, data respectively representing, for each tensor product represented by a path of the data tree structure, a row index $j$ ($1 \leq j \leq 2^n$), the column number $k[j]$ of the single non-zero element, as well as the value $m[j]$ of such non-zero element, may be stored in memory, for example in the form of data arrays (of length corresponding to the number of computed tensor products) stored in memory used for tracking the column indices and non-zero-values as the generated data tree is explored, and stored the determined values. For example, in some embodiments, the arrays $k$ and $m$ used for storing determined values with respect to a tensor product of $n$ matrices may be of length $2^n$. In embodiments wherein all possible tensor products are computed, the arrays may be of length $2^{2n}$.

In some embodiments, the data respectively representing, for each tensor product represented by a path of the data tree structure, the row index $j$ ($1 \leq j \leq 2^n$), the column number $k[j]$ of the single non-zero element, as well as the value $m[j]$ of such non-zero element, may be stored in memory in the form of three data arrays.

In some embodiments, memory space may advantageously be saved by not storing an array for the row index $j$ ($1 \leq j \leq 2^n$), since we already know that $j = [[0, 2n - 1]]$ (the row index $j$ spanning the set of natural integers from 0 to $2n$ - 1), so that two arrays, respectively denoted k and m, and respectively storing values of the column number $k[j]$ of the single non-zero element, and values $m[j]$ of the corresponding non-zero element, may be stored in memory.

In one or more embodiments, the arrays k and m may be initialized with 0 except for their first elements, which may be initialized as follows:

$$m[0] = 1$$

and

$$k[0] = \overline{d(x_{n-1}) \ldots d(x_0)}_2$$

wherein:
d designates a diagonality function defined to track the diagonality of a matrix:

$$d(U) = \begin{cases} 0, & if \ U = I \ or \ U = Z \\ 1, & if \ U = X \ or U = Y \end{cases}$$

and the following notation for a bitstring written in based 2 is used:

$$\overline{1010}_2 = 10$$

Using these notations, for $k = 0, ..., n - 1$, d(k) is either 0 or 1, $d(x_{n-1}) ... d(x_0)$ is a bitstring, and $\overline{d(x_{n-1}) ... d(x_0)}_2$ corresponds to the bitstring $d(x_{n-1}) ... d(x_0)$ written in base 2.

In other embodiments, either one or both of the arrays k and m may be fully initialized with 0.

In one or more embodiments, the arrays $k$ and $m$ may be updated through the tree exploration to progressively determine a tensor product of matrices of the set S (or, depending on the embodiment, of the set $S'$ or any other set of matrices based on the matrices of the set $S$) (which is complete once the entirety of the corresponding path of nodes of the tree (from a leaf node to a child node of the root) has been explored) corresponding to the current matrix sparse representation.

In other words, in some embodiments, for each new node of the tree being explored as part of the tree exploration, one or more of the arrays $k$ and $m$ may be updated, which leads to the arrays $k$ and $m$ storing a temporary representation of the tensor product being computed.

In one or more embodiments in which each node that is not a leaf has four child nodes ordered according to the sequence *I, X, Y,* and *Z,* the following rules for sequentially processing each child node according to the processing sequence *I, X, Y,* and *Z.* In some embodiments, the tree may be progressively updated through the exploration of the tree which may be configured so that the nodes at a given level *l* may be processed one after the other in order to determine tensor products respectively corresponding to a path running from a respective node at level 1 to a respective leaf node.

The following notation is used to consider a subpart of an array: For an exemplary array *k* and some indices *a* and *b, k[a: b]* corresponds to the sub-array extracted from *k* between the index *a* included and the index & not included.

Depending on whether the current node corresponds to a matrix *I, X, Y* or *Z* of the set *S*:

The current node is *I,* which is processed first in the processing sequence *I, X, Y, Z*: both k and m arrays are updated, as follows:

$$k[2^l : 2^{l+1}] = k[0 : 2^l] + 2^l$$

$$m[2^l : 2^{l+1}] = m[0 : 2^l]$$

The current node is *X,* which is processed second (after the node *I* having a common parent node with the current node *X* is processed) in the processing sequence *I, X, Y, Z*: only the *k* array is updated, as follows:

$$k[2^l : 2^{l+1}] = k[2^l : 2^{l+1}] - 2^{l+1}$$

The current node is *Y,* which is processed third (after the nodes *I* and *X* having a common parent node with the current node *Y* is processed) in the processing sequence *I, X, Y, Z*: only the m array is updated as follows:

$$m[2^l : 2^{l+1}] = -m[2^l : 2^{l+1}]$$

The current node is *Z,* which is processed fourth (after the nodes *I, X,* and *Y* having a common parent node with the current node *Z* is processed) in the processing sequence *I, X, Y, Z*: only the *k* array is updated as follows:

$$k[2^l : 2^{l+1}] = k[2^l : 2^{l+1}] + 2^{l+1}$$

If *l = n,* the current node is a leaf, which means that all the data needed to be computed for a given tensor product of n matrices of the set 5 have been computed and stored in the arrays *k* and *m*. At this stage, the data held in the arrays *k* and m which correspond to the given tensor product of *n* matrices of the set *S* that was progressively computed through exploring the tree along the path of length *n* that corresponds to the given tensor product may be stored in memory.

In some embodiments, a *"yield"* computing function may be used to output the two arrays holding their current data during execution of a computer function for exploring the entire tree without exiting the execution of such function, so that other tensor products may be computed by continuing the tree exploration, as the *"yield"* function typically does not stop a main function call.

In some embodiments, once all the nodes of the data tree structure have been explored, all the elements of the Pauli basis to be computed will have been yielded, and may be exploited, for example for a Pauli decomposition.

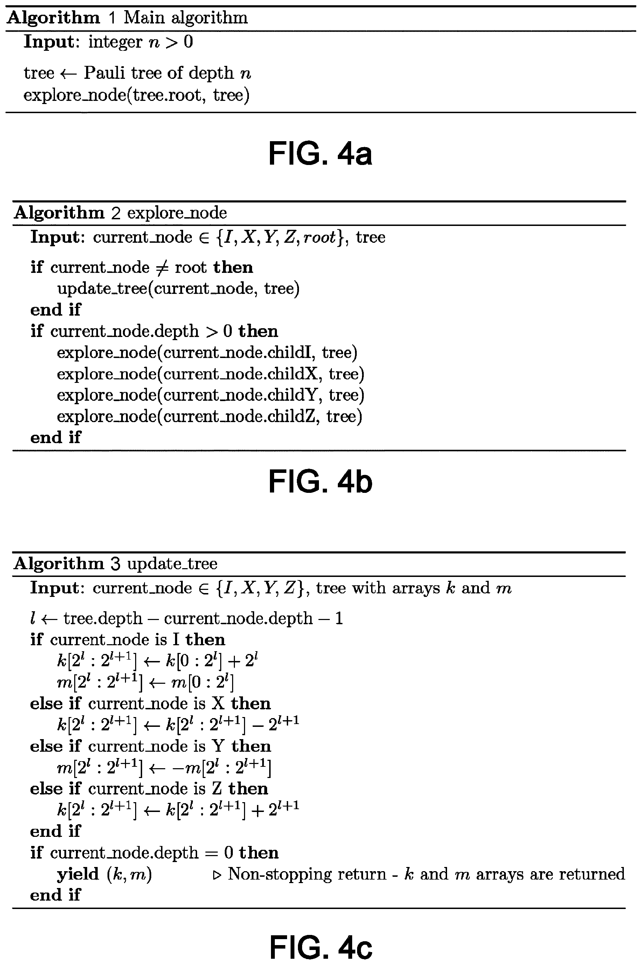

Figs. 4a - 4c show an exemplary implementation of a method for determining the tensor products of a n-dimensioned Pauli basis according to embodiments of the present subject disclosure.

As shown on Fig. 4a, a main algorithm may be configured to generate a data tree corresponding to the tensor products to be determined, and to determine the tensor products by sequentially performing processing of matrices respectively corresponding to the nodes of the data tree according to processing sequences respectively corresponding to the sequence of child nodes having a same parent node, through exploring of the data tree.

In some embodiments, a data tree structure of depth *n* (with *n* + 1 levels, the root of the data tree being at level 0) may be generated according to embodiments of the present subject disclosure, and stored in a memory of a computer system used for implementing the main algorithm as a data structure *"tree"*.

In some embodiments, the data structure *"tree"* may be generated based on the tensor products to be determined. In the specific example shown on Figs. 4a - 4c, the tree may be generated so that all of the tensor products of the Pauli basis of size *n* may be determined. As a consequence, the data tree "tree" may be generated with each node not being a leaf node (each node at a level *l*, *l* = 0, ..., *n* - 1) having four child nodes respectively corresponding to the matrices of the set S.

In some embodiments, the generated tree data structure *tree* may be explored, starting with the root *tree.root* of the tree data structure *tree* (*explore_node*(*tree.root, tree*)).

Fig. 4b shows an exemplary implementation of a method for exploring the tree data structure according to embodiments of the present subject disclosure.

The exemplary *explore_node* operation shown on Fig. 4b is configured to use as input data a current node *current_node* of the tree data structure *tree.*

As described with respect to the generation of the tree data structure *tree,* except for the root node of the *tree,* the current node *current_node* belongs to the set *S* = {*I, X, Y, Z*}, that is, the current node *current_node* is one of the matrices *I, X, Y* or *Z* described above, or the *root* node, so that the computer function *explore_node* may be called with one of the matrices *I, X, Y, Z* or the root as input data.

As shown on Fig. 4b, the data tree *tree* may be explored through recursive calls of the computer function *explore_node.*

In some embodiments, if the input data current node is one of the matrices *I, X, Y, Z* (and therefore not the root), the tree data structure *tree* may be updated, for example according to the exemplary tree update algorithm shown on Fig. 4c. As a consequence, the update_tree computer function may be initially called only in cases where the current node is not the root of the tree.

As shown on Fig. 4a, the function explore_node is first called for the root node tree.root of the tree tree. The current_node variable as shown on Fig. 4b. is then initialized with the root node tree.root of the tree tree, and the update_tree function shown on Fig. 4c is then called with the current node being the root node tree.node.

As shown on Fig. 4c, a level variable l which corresponds to the level of the tree (during exploration of the tree) for which nodes are processed (and the tree is correspondingly updated) is updated based on the depth of the tree (tree.depth variable, for example initialized to *n* ) and the depth of the current node (current_node.depth variable, being 0 for the root node). For example, the level variable *l* is updated as: *tree.depth - current_node.depth - 1.*

In the case where the current node is the root node *tree.node,* the level l variable is initialized with *n* + 1 - 0 - 1, that is, *n.* As the level variable *l* designates the tree level as explored, defined as follows: from the root node of level *n* + 1 to the leaf nodes of level 0.

Therefore, once the root node has been processed (the level variable *l* is updated as being *n*), the processing *update_tree* of the root node ends, and returns to the *explore_node* function, with the *current_node.depth* being *n.*

As shown on Fig. 4b, it is determined as part of the *explore_node* function whether the depth of the current node is strictly greater than 0 or not.

It may be noted that in some embodiments, the variable *"current_node.depth"* which corresponds to the attribute *depth* of the current node may not be updated, as depending on the scheme used for generating the data structure *tree,* each node may be associated with a depth in the tree, so that each node may "know" its depth once generated.

In other embodiments, a computer function *depth*(*current_node*) which dynamically determines the depth of the current node may be used.

As shown on Fig. 4b, for a given depth of the current node which is greater than 0 (that is, as long as the current node being processed (explored) is not a leaf node), all the children of the current node are successively explored:

```
explore_node(current_node.childI, tree)
explore_node(current_node.childX, tree)
explore_node(current_node.childY, tree)
explore_node(current_node.childZ, tree)
```

Fig. 4b therefore illustrates an exemplary case in which the 4 child nodes of each parent node are generated according to a predefined sequence $I, X, Y,$ and $Z,$ and these 4 child nodes are processed according to a corresponding processing sequence. Specifically, the first child node of the sequence, that is, child $I,$ having first rank in the processing sequence, is first processed (instruction *explore_node*(*current_node.childI, tree*)*,* then the second child node of the sequence, that is, child $X,$ having second rank in the processing sequence, is then processed (instruction *explore_node* (*current_node.childX, tree*))*,* then the third child node of the sequence, that is, child $Y,$ having third rank in the processing sequence, is then processed (instruction *explore_node*(*current_node.childY, tree*))*,* and lastly (for the 4 nodes having the same parent node) the fourth child node of the sequence, that is, child $Z,$ having fourth and last rank in the processing sequence, is then processed (instruction *explore_node*(*current_node.childZ, tree*)*.*

As shown on Fig. 4b, each of these successive recursive calls lead to the successive executions of the *update_tree* function for each of the four child nodes of the current node.

As shown on Fig. 4c, the processing of the current node performed by executing the *update_tree* function on a current node depends on which matrix of the set $S$ is associated with the current node being processed, as explained above.

The instruction for updating the level variable $l$ advantageously allows updating the level for processing a child node of the current node by determining the data of the arrays $k$ and $m$ for the lines $2^l$ to $2^{l+1}$ of a matrix $P(x)$ corresponding to a tensor product to be determined.

As shown on Fig. 4c, in cases where the depth of the current node is 0, meaning that the current node is a leaf, the data determined for the arrays $k$ and m may be stored in a memory through the *yield*($k, m$) instruction. As shown on Fig. 4b, in case the current node is a leaf, the *update_tree* function is completed. As a leaf node does not have any child node, its depth in the tree will be 0, so that the recursive *explore_node* calls shown on Fig. 4b are not made for a leaf node. Once a leaf node is reached, the exploration of the tree goes back to its parent node through the recursive calls of the *explore_node* function, to explore the next child node of this parent node, as the case may be.

Once all of the child nodes of all the parent nodes of the tree have been processed, the data of the arrays $k$ and $m$ respectively corresponding to tensor products to be determined will have been stored in memory, and the main algorithm of Fig. 4a ends.

In one or more embodiments, a current node of the tree may be processed during the tree exploration based on a transition rule. The transition rule may define the processing to be performed on a destination node with respect to the exploration of the tree transitioning from a source node to the destination node.

Thanks to the processing of the nodes through exploration of the tree one node after the order according to a predefined exploration scheme, the present subject disclosure advantageously leverages the proximity of each matrix of the set $S$ with the other matrices of this set as each node of the tree is associated with one of the matrices of the set $S$ (or, depending on the embodiment, of the set $S$' or any other set of matrices based on the matrices of the set $S$). As a consequence, the processing of a node associated with a matrix of the set $S$ may take into account the matrix of the set $S$ (or, depending on the embodiment, of the set $S$' or any other set of matrices based on the matrices of the set $S$) with which the node previously processed is associated and/or the matrix of the set $S$ (or, depending on the embodiment, of the set $S$' or any other set of matrices based on the matrices of the set $S$) with which the node to be processed next is associated.

In one or more embodiments, one or more transition rules may be defined, each specifying the processing of a current node depending on one or more of the matrix of the set $S = \{I, X, Y, Z\}$ (or, depending on the embodiment, of the set $S$' or any other set of matrices based on the matrices of the set $S$) associated with the current node, the matrix of the set $S = \{I, X, Y, Z\}$ (or, depending on the embodiment, of the set $S$' or any other set of matrices based on the matrices of the set $S$) associated with a node of the tree processed (immediately) prior to the current node, and the matrix of the set $S = \{I, X, Y, Z\}$ (or, depending on the embodiment, of the set $S$' or any other set of matrices based on the matrices of the set S) associated with a node of the tree to be processed (immediately) after the current node.

For example, in some embodiments, a transition rule may define the processing of a current node based on the matrix of the set $S = \{I, X, Y, Z\}$ (or, depending on the embodiment, of the set $S$' or any other set of matrices based on the matrices of the set $S$) associated with the current node (the destination node if the exploration transitions from a source node that was previously processed to the current node) and based on the matrix of the set $S = \{I, X, Y, Z\}$ (or, depending on the embodiment, of the set $S$' or any other set of matrices based on the matrices of the set $S$) associated with a node of the tree processed (immediately) prior to the current node. In such case, the transition rule may be related to a transition from a source node (or correspondingly from the matrix of the set $S = \{I, X, Y, Z\}$ (or, depending on the embodiment, of the set $S$' or any other set of matrices based on the matrices of the set $S$) associated with the source node) to a destination node (or correspondingly from the matrix of the set $S = \{I, X, Y, Z\}$ (or, depending on the embodiment, of the set $S'$ or any other set of matrices based on the matrices of the set S) associated with the source node).

In one or more embodiments in which each node that is not a leaf may have up to four child nodes respectively associated with the matrices $I, X, Y,$ and $Z$ (not necessarily ordered according to any predefined sequence), transition rules (from a source node to a destination node) in the tree for sequentially processing the nodes of the tree may be defined. In some embodiments, such transition rules may be based on the matrix ($I, X, Y,$ or $Z$) associated with the source node and on the matrix ($I, X, Y,$ or $Z$) associated with the destination node for each transition from a source node to a destination node.

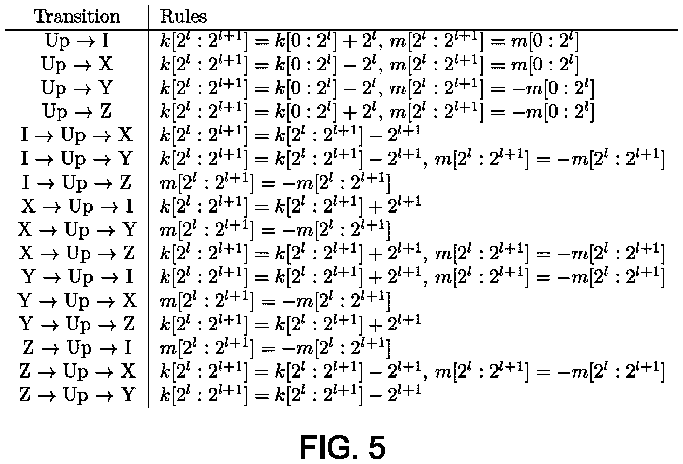

Fig. 5 shows an exemplary set of transition rules which may be used in one or more embodiments.

Shown on Fig. 5 is an array with a left column of transitions, and a right column with respectively corresponding exemplary transition rules. The array of Fig. 5 shows exemplary transition rules considering a Pauli node (matrice $I, X, Y,$ or $Z$) at depth $l$ and a parent node at depth $l-1$ (denoted "Up" node on Fig. 5).

A person of ordinary skill in the art would understand that the processes, apparatuses and computer programs of the present subject disclosure may be implemented based on any suitable transition rules or sets of transition rules, and that such proposed processes, apparatuses and computer programs of the present subject disclosure are not limited to the use of any specific transition rule, and in particular to each of the exemplary transition rules shown on Fig. 5 or the combination of transition rules shown on Fig. 5, which is provided as an example only. Depending on the implementation, each of the transition rules shown on Fig. 5 may be modified, deleted, or replaced with a different transition rule according to what is deemed suitable to such implementation.

Quantum computations performed on a quantum system of n qubits may lead to processing on a quantum computer a data matrix of $\mathbb{C}^{2^n \times 2^n}$

In one or more embodiments, the proposed scheme according to the present subject disclosure may therefore advantageously be directed to operations performed on an input data matrix of size $\mathbb{C}^{2^n \times 2^n}$. For example, the algorithm of Fig. 4a may be used for determining a decomposition of an input matrix into a Pauli basis according to embodiments of the present subject disclosure. The main algorithm may be configured to use an input matrix A of size $\mathbb{C}^{2^n \times 2^n}$ as input data. In cases where the matrix to be processed has a size smaller than $\mathbb{C}^{2^n \times 2^n}$, an input data matrix of size $\mathbb{C}^{2^n \times 2^n}$ can be generated, for example by zero-padding in order to reach the desired size $\mathbb{C}^{2^n \times 2^n}$.

In some embodiments, the proposed scheme may be used with respect to the specific case of an input data matrix of size $\mathbb{C}^{2^n \times 2^n}$, which corresponds to quantum computations to be performed in a quantum system of n qubits. However, it will be appreciated by those having ordinary skill in the relevant art that embodiments provided in the present subject disclosure may be used with any other input data matrix of size other than $\mathbb{C}^{2^n \times 2^n}$, so that the proposed processes, apparatuses and computer programs of the present subject disclosure may be implemented for processing an input data matrix of any size smaller than $\mathbb{C}^{2^n \times 2^n}$. Accordingly, such proposed processes, apparatuses and computer programs of the present subject disclosure are not limited to the use of an input data matrix of size $\mathbb{C}^{2^n \times 2^n}$, which is provided as an example only.

Applications involving quantum computations, that is computations to be executed on a quantum computer, sometimes require block encoding of such a matrix of $\mathbb{C}^{2^n \times 2^n}$ for quantum singular value transformation. The block encoding may typically be performed using a decomposition of the matrix using a basis of Pauli operators.

In one or more embodiments, one considers an input matrix $A$ of size $\mathbb{C}^{2^n \times 2^n}$, with the size $n$ being a non-zero natural integer. The $A$ input matrix can be seen as corresponding to a matrix of $n$ qbits.

The present subject disclosure advantageously provides a scheme for, given an input matrix $A$ of size $\mathbb{C}^{2^n \times 2^n}$, determining a decomposition of the form $A = \Sigma_{P_i \in \wp_n} a_i \cdot P_i$, that is, determining for each element $P_i \in \wp_n$ of the Pauli operator basis $\wp_n$ a corresponding coefficient $\alpha_i \in \mathbb{C}$.

In some embodiments, the matrix $A$ may be decomposed in the Pauli basis using the following method for matrix decomposition in a unitary basis applied to the Pauli operator basis being a specific case of a unitary basis:

First considering the specific case of an input matrix $A$ of size $\mathbb{C}^{2^2 \times 2^2}$, the decomposition coefficient $a_{M0M1}$ of the input matrix $A$ (corresponding to the element $M_0 \otimes M_1$ of the Pauli operator basis $\wp_2$), where $M_0$ and $M_1$ belong to the set $S = \{I, X, Y, Z\}$ (or, depending on the embodiment, of the set S' or any other set of matrices based on the matrices of the set S) can be determined based on the following equation:

$$\alpha_{M_0 M_1} = \frac{1}{4} \cdot Tr\big((M_0 \otimes M_1) \cdot A\big)$$

The above expression of the decomposition coefficient $\alpha_{M0M1}$ can be extended from a size 2 to any size $n \in \mathbb{N}^*$ for decomposing a matrix $A$ of size $\mathbb{C}^{2^n \times 2^n}$ for determining the decomposition coefficient $a_{M0M1 \cdots Mn-1}$ (corresponding to the element $\otimes_{i=0}^{n-1} M_i$ of the Pauli operator basis $\wp_2$) based on the following equation:

$$\alpha_{M_0 M_1 \cdots M_{n-1}} = \frac{1}{2^n} \cdot Tr\left((\otimes_{i=0}^{n-1} M_i) \cdot A\right)$$

As shown by the above equation, $4^n$ decomposition coefficients $a_{M0M1 \cdots Mn-1}$ are to be determined for an input matrix $A$ of size $\mathbb{C}^{2^n \times 2^n}$, and each decomposition coefficient $\alpha_{M0M1 \cdots Mn-1}$ may be determined by first determining the result of $n$ - 1 tensor (Kronecker) product operations between $n$ matrices of the set $S = \{I, X, Y, Z\} \, (\otimes_{i=0}^{n-1} M_i)$, and determining the trace of the matrix product between the matrix resulting from the tensor (Kronecker) product operations and the A matrix $\left((\otimes_{i=0}^{n-1} M_i) \cdot A\right)$.

Performing these operations in a conventional straightforward manner would lead to a total computation cost of the algorithm of $O(n2^{4n})$. The present subject disclosure advantageously provides a method for performing the decomposition at a much lesser computational cost.

Embodiments of the present subject disclosure may advantageously be used to implement an improved quantum circuit (which may also be referred to herein as a "quantum computer software") configured to be executed on a quantum processor for processing quantum systems with a large number of qubits (e.g. 15 qubits).

In one or more embodiments, a quantum circuit comprising one or more quantum gates may be generated based on tensor products determined using a method according to embodiments of the present subject disclosure. For example, the proposed scheme may be used for implementing a matrix decomposition in a Pauli basis by determining the matrices of the Pauli basis used in the decomposition as well as their corresponding decomposition coefficients, a term of the decomposition corresponding to one or more quantum gates that may be determined based on the results of the determination of tensor products proposed in embodiments of the present subject disclosure.

A quantum circuit generated based on tensor products determined using a method according to embodiments of the present subject disclosure may be produced as a quantum software implementation of a quantum data processing using one or more quantum gates, which is advantageously usable in various fields of quantum mechanics or quantum physics.

Therefore, using the methods proposed in the present subject disclosure advantageously allows generating quantum circuits configured for processing quantum systems with a large number of qubits (e.g. 15 qubits), thereby comprising components implementing large tensor products determined with a drastically reduced computation time (to the point where such large tensor products can be determined in a realistic computational time), as compared to conventional methods using which such tensor products would not be computable in a realistic computational time.

In another example, embodiments of the present subject disclosure can advantageously be used for generating observables, in particular in cases where such observables take the form of large size matrices that can be decomposed in a pauli basis.

In some embodiments, a decomposition of an input matrix into a Pauli basis may advantageously be performed using a method proposed in the present subject disclosure, in order to generate an observable usable for computation by a quantum computer, in particular for the processing of quantum systems with a large number of qubits (e.g. 15 qubits).

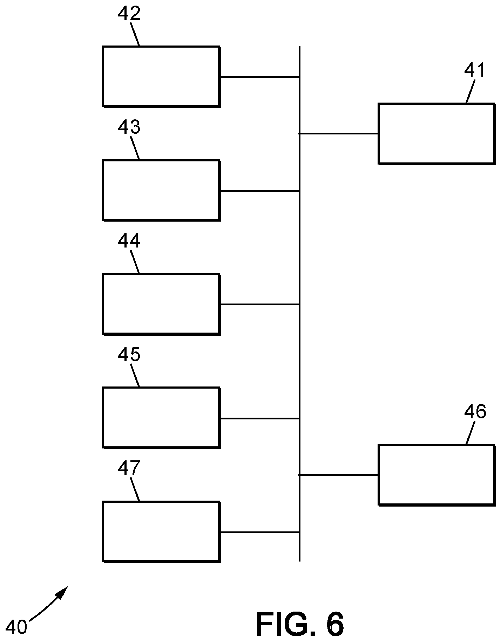

An exemplary architecture of a non-quantum computer apparatus according to the present subject disclosure is illustrated on Fig. 6, which shows a computer apparatus (40) configured to perform a method in accordance with embodiments of the present subject disclosure.

The computer apparatus 40 includes a control engine 41, a tensor product determination engine 42, a tree generation engine 43, a tree exploration and processing engine 44, an input interface 45, an output interface 46, and a memory 47.

In the architecture illustrated on Fig. 6, all of the tensor product determination engine 42, tree generation engine 43, tree exploration and processing engine 44, input interface 45, output interface 46, and memory 47 are operatively coupled with one another through the control engine 41.

In some embodiments, the input interface 45 is configured for receiving data representing a size $n \in \mathbb{N}^*$, and one or more tensor products (for example of a Pauli operator basis $\wp_n$ of size $n \in \mathbb{N}^*$, wherein $\wp_n$ comprises tensor products of n matrices of the set $S = \{I, X, Y, Z\}$ ($\wp_n = \{\otimes_n M_n, M_n \in \{I, X, Y, Z\}\}$)), and transmitting received data to the control engine 41 for further processing according to embodiments of the present subject disclosure.

In some embodiments, the output interface 46 is configured for outputting data representing the determined one or more tensor products according to embodiments of the present subject disclosure and transmitting such data to an external host or to another engine of the computer apparatus 40.

In some embodiments, the tensor product determination engine 42 may be configured to process received data for determining, based on such received data, one or more tensor products (for example of the Pauli operator basis $\wp_n$) of size $n \in \mathbb{N}^*$.

In some embodiments, the tree generation engine 43 may be configured to generate a data tree as a data structure that represents the one or more tensor products (for example of the Pauli operator basis $\wp_n$) to be determined, according to embodiments of the present subject disclosure. In particular, in one or more embodiments, the one or more tensor products may respectively correspond to one or more paths of the data tree each running from a root node of the data tree to a leaf of the data tree.

In some embodiments, the tree exploration and processing engine 44 may be configured to determine the one or more tensor products (of the Pauli operator basis $\wp_n$) by performing a tree exploration of the data tree generated by the tree generation engine 43.

In some embodiments, the computer apparatus 40 does not include a memory management engine, and one or more embodiments of the memory management scheme provided in the present subject disclosure are implemented in the software programming of the engines of the computer apparatus 40, such as the tensor product determination engine 42, the tree generation engine 43, and the tree exploration and processing engine 44.

The control engine 41 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 41 may also comprise, or may be in communication with, computer storage media, such as, without limitation, the memory 47, capable of storing computer program instructions or software code that, when executed by the processor, cause the processor to perform the elements described herein. In addition, the memory 47 may be any type of data storage or computer storage medium coupled to the control engine 41 and operable with the interfaces 45 - 46 to facilitate management of data stored in association therewith, such as, for example, a cache memory, a RAM memory, a ROM memory, a FPGA memory, a datacenter, a data cloud, or a combination thereof.

In some embodiments, the memory 47 may comprise a memory buffer dimensioned for storing the data of arrays k and m representing coefficients of the matrices resulting from the determined tensor products. In some embodiments, the size of memory used for implementing a scheme according to the present subject disclosure may advantageously be reduced, for example through use of a *yield* computer operator (function), which can advantageously be configured for returning a result which is dynamically processed without (temporarily) storing such result in memory, in the implementation of a proposed method according to the present subject disclosure..

In addition, the memory 47 may be configured to store the data tree structure generated by the tree generation engine 43.

It will be appreciated that the computer apparatus 40 shown and described with reference to Fig. 6 is provided by way of example only. Numerous other architectures, operating environments, and configurations are possible. Other embodiments of the node may include fewer or greater number of components, and may incorporate some or all of the functionality described with respect to the processing node components shown in Fig. 6. Accordingly, although the control engine 41, tensor product determination engine 42, tree generation engine 43, tree exploration and processing engine 44, input interface 45, output interface 46, and memory 47 are illustrated as part of the system 30, no restrictions are placed on the location and control of components 30 - 47. In particular, in other embodiments, components 30 - 47 may be part of different entities or computing systems.

In particular, the computer apparatus 40 may be embedded computer system, an electronic component (e.g. a FPGA device), or any other device comprising a processor operatively coupled with a memory.

The computer apparatus 40, and more generally any device configured for implementing embodiments of the present subject disclosure, may be implemented in software, in hardware, such as for example in an ASIC component, or in a combination of software and hardware, such as for example as a computer program designed to be loaded and executed on a FPGA device.

Different use cases of embodiments of the present subject disclosure are further described in the following:

*Quantum Singular Value Transformation*

The Quantum Singular Value Transformation (QSVT) is a technique that performs a polynomial transformation of the singular values of a linear operator embedded in a unitary matrix. In other words, given a matrix A, the QSVT applies a polynomial transformation P to the singular values of A. The QSVT framework can encompass a wide range of applications such as linear system solving, Hamiltonian simulation (to solve physics problem or study structures at smallest scales), specific quantum state selection, etc.. In fact, the type of applications treated by QSVT is quite similar to those treated by SVD. It can be used to find the pseudoinverse of a matrix, to solve homogeneous linear equations, total least squares minimization and a lot of other tasks. To apply the QSVT, one needs first to store the linear operator in matrix form on the quantum computer. This task can be done through block-encoding, as described below:

*Block-encoding*

The quantum block encoding is a technique for embedding a non-unitary matrix $A \in \mathbb{C}^{N \times N}$ (with $N = 2^n$) into a unitary matrix $U_A$ where:

$$U_A = \begin{bmatrix} A & \cdot \\ \cdot & \cdot \end{bmatrix}$$

Then, when one applies $U_A$ to $|0\rangle_{anc}|x\rangle_{data}$ it yields

$$U_A|0\rangle_{anc}|x\rangle_{data} = |0\rangle_{anc}A|x\rangle_{data} + |1\rangle_{anc}|\ldots\rangle_{data}$$

A post-selection on the ancilla $|0\rangle_{anc}$ leads to $A|x\rangle_{data}$.

Block-encoding using Pauli operators One technique for block-encoding consists in decomposing the matrix $A$ of $\mathbb{C}^{2^n \times 2^n}$ in the Pauli basis $\wp_n = \{\otimes_n M_n, M_n \in \{I, X, Y, Z\}\}$. Let us consider that the matrix A admits a decomposition in $M = 2^m$ Pauli operators:

$$A = \sum_{s \in \{0,1\}^m} \alpha_s \cdot V_s$$

where $\alpha_s$ are non-zero real numbers.

To apply the matrix $A$ to the quantum state $|\psi\rangle$:

1. Allocate a register of qubits and prepare the initial state $|\psi\rangle$
2. Allocate m ancilla qubits and prepare on them:

$$\frac{1}{||\alpha||} \sum_{s \in \{0,1\}^m} \alpha_s \, |s\rangle$$

3. Controlled by the ancilla qubits, apply $V_s$ to the state $|\psi\rangle$
4. Undo step 2

The quantum circuit generated by this algorithm enables the storing of the matrix A inside the quantum computer and can be used inside the QSVT routine.

As this block-encoding technique relies on a prior decomposition of the *A* matrix in the Pauli basis, obtaining this decomposition may be very challenging as conventional algorithms bring an exponential cost in the pre-processing needed to generate the quantum circuit. Therefore, the optimization of this decomposition advantageously provided by embodiments of the present subject disclosure is crucial for generating the quantum circuit.

While the invention has been described with respect to preferred embodiments, those skilled in the art will readily appreciate that various changes and/or modifications can be made to the invention without departing from the scope of the invention as defined by the appended claims.

Although this subject disclosure has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the subject disclosure. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

**Claims**

1. A computer-implemented method for processing, on a computer, data that represent one or more tensor products of matrices of the set $S = \{I, X, Y, Z\}$, wherein $I$ is a $2 \times 2$ identity matrix, and $X, Y, Z$ are the following Pauli matrices:

$$X = \begin{bmatrix} 0 & 1 \\ 1 & 0 \end{bmatrix}, Y = \begin{bmatrix} 0 & -i \\ i & 0 \end{bmatrix}, \text{ and } Z = \begin{bmatrix} 1 & 0 \\ 0 & -1 \end{bmatrix},$$

the method comprising:

Generating a data tree as a data structure that represents the one or more tensor products, wherein the one or more tensor products respectively correspond to one or more paths of the data tree, a path of the data tree running from a root node of the data tree to a leaf of the data tree; and
Determining the one or more tensor products by performing a tree exploration of the generated data tree.

2. The computer-implemented method of claim 1, wherein the generated data tree comprises the root node and one or more levels with nodes, wherein one or more nodes in the tree, except for the root node, is connected to only one parent node, and the root node has no parent, wherein one or more nodes of the tree that is not a leaf has one or more child nodes respectively associated with matrices of the set of matrices $S = \{I, Z, Y, Z\}$.

3. The computer-implemented method of any of the preceding claims, wherein one or more nodes of the data tree are respectively associated with a matrix of the set of matrices $S = \{I, Z, Y, Z\}$.

4. The computer-implemented method of any of the preceding claims, wherein the generating the data tree further comprises:

   • Generating a root node which is not associated with any matrix of the set $S = \{I, X, Y, Z\}$;
   • Performing n iterations of a tree generation loop,

   wherein an iteration of index $l$ corresponding to a tree level comprises: for each node at level $l$, generating one or more child nodes respectively associated with a matrice of the set $S = \{I, X, Y, Z\}$.

5. The computer-implemented method of any of claims 2 - 4, wherein the child nodes of a plurality of parent nodes of the generated data tree form a sequence corresponding to a permutation of matrix elements of the set $S = \{I, X, Y, Z\}$.

6. The computer-implemented method of any of the preceding claims, wherein a tensor product of the one or more tensor products is a matrix of size $2^n \times 2^n$, wherein a line of index $j$ of the $2^n$ lines of the matrix has a single non-zero element at a column index $k[j]$, the method further comprising:
Processing a current node of the tree during the tree exploration, the processing comprising: Determining $k$ values and m values based on one or more of: a tree level $l$ of the current node of the tree, and a matrix of the set $S = \{I, X, Y, Z\}$ with which the current node is associated.

7. The computer-implemented method of claims 2 and 5, wherein the determining the $k$ values and the m values comprises: computing one or more of the $k$ values and the m values depending on one or more of the three matrices of the set $S = \{I, X, Y, Z\}$ which have in the tree the same parent node as the current node.

8. The computer-implemented method of any of the preceding claims, wherein a current node of the tree is processed during the tree exploration based on a transition rule which defines the processing of the current node depending on one or more of: a matrix of the set $S = \{I, X, Y, Z\}$ associated with the current node, a matrix of the set $S = \{I, X, Y, Z\}$ associated with a node of the tree processed prior to the current node, and a matrix of the set $S = \{I, X, Y, Z\}$ associated with a node of the tree to be processed after the current node.

9. The computer-implemented method of any of the preceding claims, further comprising: Processing a current node of the tree during the tree exploration, the processing comprising:

   Determining a sequence according to which child nodes of the current node are positioned in the data tree with respect to the current node; and
   Processing the child nodes of the current node according to a processing sequence that corresponds to the determined sequence.

10. The computer-implemented method of claim 9, wherein the processing of a child node of the current node is based on the position of the child node in the processing sequence.

11. The computer-implemented method of any of claims 9 or 10, wherein the processing of a child node of the current node is based on a matrix of the set $S = \{I, X, Y, Z\}$ associated with a child node preceding said child node in the processing sequence.

12. The computer-implemented method of any of the preceding claims, further comprising: performing matrix decomposition of an input matrix $A$ of size $\mathbb{C}^{2^n \times 2^n}$ into a combination of Pauli operators $P_i$ of the type $A = \Sigma_{P_i \in \wp n} \alpha_i P_i$, wherein one or more Pauli operator $P_i$ is comprised in a Pauli operator basis $\wp_n$ comprising $n - 1$ tensor products of $n$ matrices among Pauli matrices $X, Y, Z$ and the identity matrix $I$, the matrix decomposition comprising:
Determining one or more decomposition coefficients $a_i$ respectively corresponding to elements $P_i$ of the Pauli operator basis using a method according to any of claims 1 to 11.

13. The computer-implemented method of claim 12, wherein the determination of a decomposition coefficient comprises:

   Determining a tensor product matrix corresponding to a tensor product of $n$ elements of the Pauli operator basis corresponding to the decomposition coefficient; and
   Performing a matrix product of the tensor product matrix and the input matrix $A$.

14. An apparatus, the apparatus comprising a processor and a memory operatively coupled to the processor, wherein the apparatus is configured to perform a method according to any of claims 1 to 13.

15. A computer program product comprising computer program code tangibly embodied in a computer readable medium, said computer program code comprising instructions to, when provided to a computer system and executed, cause said computer to perform a method according to any of claims 1 to 13.

11

Generating a data tree as a data structure that represents one or more tensor products,the one or more tensor products respectively corresponding to one or more paths of the data tree, a path of the data tree running from a root node of the data tree to a leaf of the data tree

Determining the one or more tensor products by performing a tree exploration of the generated data tree

10

12

# FIG. 1

FIG. 2a

FIG. 2b

FIG. 2c

```
class Node:
    def __init__(self, tree, pauli, depth):
        self.pauli = pauli
        self.depth = depth
        self.tree = tree
        if self.depth:
            self.Ichild = Node(tree, "I", depth-1)
            self.Xchild = Node(tree, "X", depth-1)
            self.Ychild = Node(tree, "Y", depth-1)
            self.Zchild = Node(tree, "Z", depth-1)
        else:
            self.Ichild = None
            self.Xchild = None
            self.Ychild = None
            self.Zchild = None

class Tree:
    def __init__(self, n):


        self.depth = n
        self.root = Node(self, None, self.depth)
        self.k = np.zeros((1 << self.depth), dtype=int)
        self.m = np.zeros((1 << self.depth), dtype=complex)
```

## FIG. 2d

## FIG. 3

---

**Algorithm 1** Main algorithm

---

**Input:** integer $n > 0$

tree $\leftarrow$ Pauli tree of depth $n$
explore_node(tree.root, tree)

---

# FIG. 4a

---

**Algorithm 2** explore_node

---

**Input:** current_node $\in \{I, X, Y, Z, root\}$, tree

**if** current_node $\neq$ root **then**
    update_tree(current_node, tree)
**end if**
**if** current_node.depth $> 0$ **then**
    explore_node(current_node.childI, tree)
    explore_node(current_node.childX, tree)
    explore_node(current_node.childY, tree)
    explore_node(current_node.childZ, tree)
**end if**

---

# FIG. 4b

---

**Algorithm 3** update_tree

---

**Input:** current_node $\in \{I, X, Y, Z\}$, tree with arrays $k$ and $m$

$l \leftarrow$ tree.depth $-$ current_node.depth $- 1$
**if** current_node is I **then**
    $k[2^l : 2^{l+1}] \leftarrow k[0 : 2^l] + 2^l$
    $m[2^l : 2^{l+1}] \leftarrow m[0 : 2^l]$
**else if** current_node is X **then**
    $k[2^l : 2^{l+1}] \leftarrow k[2^l : 2^{l+1}] - 2^{l+1}$
**else if** current_node is Y **then**
    $m[2^l : 2^{l+1}] \leftarrow -m[2^l : 2^{l+1}]$
**else if** current_node is Z **then**
    $k[2^l : 2^{l+1}] \leftarrow k[2^l : 2^{l+1}] + 2^{l+1}$
**end if**
**if** current_node.depth $= 0$ **then**
    **yield** $(k, m)$     $\triangleright$ Non-stopping return - $k$ and $m$ arrays are returned
**end if**

---

# FIG. 4c

| Transition | Rules |
|---|---|
| Up → I | $k[2^l : 2^{l+1}] = k[0 : 2^l] + 2^l,\ m[2^l : 2^{l+1}] = m[0 : 2^l]$ |
| Up → X | $k[2^l : 2^{l+1}] = k[0 : 2^l] - 2^l,\ m[2^l : 2^{l+1}] = m[0 : 2^l]$ |
| Up → Y | $k[2^l : 2^{l+1}] = k[0 : 2^l] - 2^l,\ m[2^l : 2^{l+1}] = -m[0 : 2^l]$ |
| Up → Z | $k[2^l : 2^{l+1}] = k[0 : 2^l] + 2^l,\ m[2^l : 2^{l+1}] = -m[0 : 2^l]$ |
| I → Up → X | $k[2^l : 2^{l+1}] = k[2^l : 2^{l+1}] - 2^{l+1}$ |
| I → Up → Y | $k[2^l : 2^{l+1}] = k[2^l : 2^{l+1}] - 2^{l+1},\ m[2^l : 2^{l+1}] = -m[2^l : 2^{l+1}]$ |
| I → Up → Z | $m[2^l : 2^{l+1}] = -m[2^l : 2^{l+1}]$ |
| X → Up → I | $k[2^l : 2^{l+1}] = k[2^l : 2^{l+1}] + 2^{l+1}$ |
| X → Up → Y | $m[2^l : 2^{l+1}] = -m[2^l : 2^{l+1}]$ |
| X → Up → Z | $k[2^l : 2^{l+1}] = k[2^l : 2^{l+1}] + 2^{l+1},\ m[2^l : 2^{l+1}] = -m[2^l : 2^{l+1}]$ |
| Y → Up → I | $k[2^l : 2^{l+1}] = k[2^l : 2^{l+1}] + 2^{l+1},\ m[2^l : 2^{l+1}] = -m[2^l : 2^{l+1}]$ |
| Y → Up → X | $m[2^l : 2^{l+1}] = -m[2^l : 2^{l+1}]$ |
| Y → Up → Z | $k[2^l : 2^{l+1}] = k[2^l : 2^{l+1}] + 2^{l+1}$ |
| Z → Up → I | $m[2^l : 2^{l+1}] = -m[2^l : 2^{l+1}]$ |
| Z → Up → X | $k[2^l : 2^{l+1}] = k[2^l : 2^{l+1}] - 2^{l+1},\ m[2^l : 2^{l+1}] = -m[2^l : 2^{l+1}]$ |
| Z → Up → Y | $k[2^l : 2^{l+1}] = k[2^l : 2^{l+1}] - 2^{l+1}$ |

# FIG. 5

FIG. 6

Europäisches
Patentamt

European
Patent Office

Office européen
des brevets

## EUROPEAN SEARCH REPORT

Application Number

EP 23 21 2112

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PHILIPP SEITZ ET AL: "Simulating quantum circuits using tree tensor networks", ARXIV.ORG, CORNELL UNIVERSITY LIBRARY, 201 OLIN LIBRARY CORNELL UNIVERSITY ITHACA, NY 14853, 22 March 2023 (2023-03-22), XP091462563, * page 1 - page 4 * * page 11 * | 1-15 | INV. G06N10/20 G06N10/60 G06N10/80 |

TECHNICAL FIELDS SEARCHED (IPC)

G06N

The present search report has been drawn up for all claims

| Place of search | Date of completion of the search | Examiner |
|---|---|---|
| The Hague | 6 May 2024 | Bohn, Patrice |

EPO FORM 1503 03.82 (P04C01)